# EUROPEAN PATENT SPECIFICATION

(11) **EP 3 370 239 B1**
(45) Date of publication and mention of the grant of the patent: **21.12.2022**
(21) Application number: 15907378.2
(22) Date of filing: 01.12.2015
(51) Int. Cl.: H01B 12/16, H01B 17/54, H01B 13/00, H01B 12/00, H02G 15/34

(54) **SUPERCONDUCTING CABLE TERMINAL DEVICE**
KLEMMENVORRICHTUNG FÜR SUPRALEITENDES KABEL
BORNE DE CÂBLE SUPRACONDUCTEUR

(30) Priority: 29.10.2015 KR 20150150774
(43) Date of publication of application: 05.09.2018
(73) Proprietor: Korea Electrotechnology Research Institute, Changwon-si, Gyeongsangnam-do 51543 (KR)
(72) Inventor: RYOO, Hee-suk, Hwaseong-si Gyeonggi-do 18427 (KR); KIM, Hae-jong, Changwon-si Gyeongsangnam-do 51471 (KR); SIM, Ki-deok, Gimhae-si Gyeongsangnam-do 50990 (KR); OH, Sang-soo, Gimhae-si Gyeongsangnam-do 51015 (KR); CHO, Jeon-wook, Changwon-si Gyeongsangnam-do 51408 (KR)
(74) Representative: HGF
(86) International application number: PCT/KR2015/012945
(87) International publication number: WO 2017/073833

(56) References cited:
- WO-A1-94/13048
- JP-A- H08 504 300
- JP-A- H10 134 652
- JP-A- 2005 341 767
- JP-A- 2005 341 767
- JP-A- 2009 027 843
- JP-A- 2013 162 607
- JP-A- 2013 178 958
- KR-A- 20130 113 001
- US-A1- 2014 162 882
- US-A1- 2014 299 307

## Description

### Technical Field

The present invention relates to a superconducting cable terminal device and, more particularly, to a superconducting cable terminal device having a reduced overall volume, wherein insulation and cooling for the device are performed in parallel by including a refrigerant circulation path for forcibly cooling a current lead and a connecting unit acting as a fixed thermal equilibrium point in an insulation bushing.

### Background Art

In general, a superconducting cable terminal device refers to equipment that connects a general overhead transmission line composed of a conductor or electrical power equipment such as a gas insulated switchgear (GIS), a transformer and so on to a superconducting cable. That is, the superconducting cable terminal device is a connecting device for connecting a superconducting cable that transmits electrical power at a cryogenic temperature to an overhead transmission line or electrical power equipment such as a circuit breaker and a transformer that are at ambient temperature. This terminal device is a comprehensive system that has to resolve electrical, mechanical, and thermal problems arising from the connection of an electrical circuit at an ambient temperature and a superconducting circuit at a liquid helium or liquid nitrogen temperature.

Various technologies related to a terminal device are available, and "Terminal device for superconducting cable" is introduced in Korean Patent No. KR 10-508710. As illustrated in FIGS. 1 and 2, for both a conventional art of a superconducting cable terminal structure composed of an ambient temperature unit 330 filled with insulation oil 334, and a cryogenic temperature unit 220 coupled with the ambient temperature unit 330 by a fixing flange 230, equipped with a current unit 350, and being vacuumized, a boundary unit 400 is formed within the coupling part of the ambient temperature unit 330 and cryogenic temperature unit 220 to mitigate an electric field concentrated in a current lead unit 350 and to maintain leak tightness between the ambient temperature unit 330 and the cryogenic temperature unit 220.

In addition, the boundary unit 400 is formed with the following: a metal conducting rod 410 connecting the upper conductor 340 installed by the insertion into the ambient temperature unit 330 and the lower conductor 240 installed by the insertion into the cryogenic temperature unit 220; embedded electrodes 420 being coupled together by the flange coupling with the ambient temperature unit 330 and the cryogenic temperature unit 220 while enclosing the metal conducting rod 410, both ends of the electrodes being rounded in shape; and an insulating material 430 mold injected together with the metal conducting rod 410 and the embedded electrode 420.

However, though the conventional art does not specify the medium of the boundary unit, it is understood the structure thereof is vacuumized or filled with gas judging by both ends of upper and lower solid insulation bushings having a surface insulation structure. In such a structure, a lower surface insulation structure of the upper solid insulation bushing and an upper surface insulation structure of the lower solid insulation bushing are requisite to assure electrical insulation characteristics. As an interface of gas-liquid is located on a ground plane, such structure has an advantage in terms of operation for avoiding degradation of insulation characteristics due to interface flow of a gas-liquid or a bubble. However, a superconducting terminal invented or manufactured by such a conventional technique requires a structure having two to four surface insulation layers or interface insulation layers to provide both electrical insulation characteristics and a cooling function with respect to an internal structure. Thereby, such a structure generally increases the overall volume of the superconducting terminal and exposes a central conductor directly to a refrigerant at several parts where high voltage is applied to stably maintain the end part of superconducting cable containing the superconducting conductor at a cryogenic temperature. Because of the reasons as above, a finally manufactured superconducting terminal has a problem wherein it is difficult to be directly installed on a connecting unit of an existing pylon of transmission line or a substation due to the type and size thereof.

"Terminal device for superconducting cable" is introduced in Korean Patent No. KR 10-0590200, as the other conventional art.

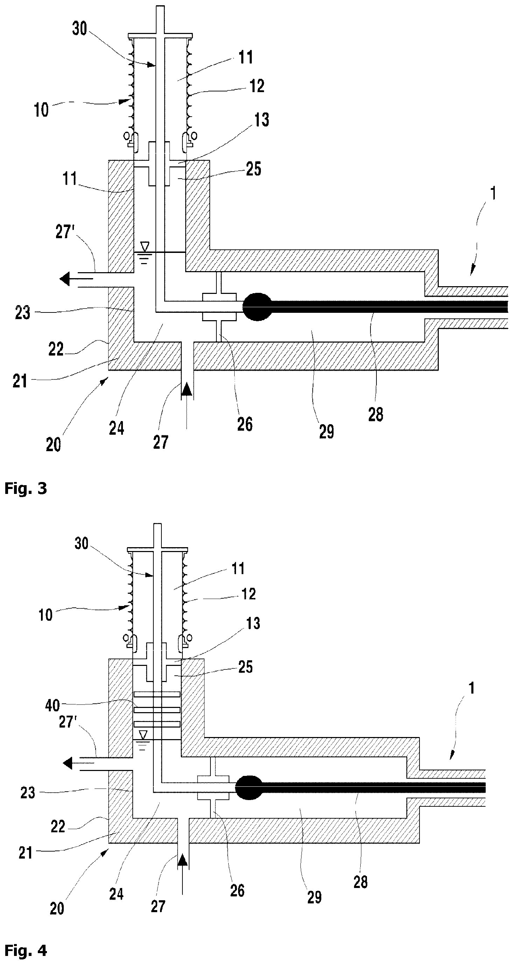

The other conventional art is illustrated in FIG. 3 or 4.

In FIG. 3, composed are an ambient temperature unit 10 of an upper part of the terminal device, a cryogenic temperature unit 20 of a lower part of the terminal device, and a current lead-in wire 30 passing through the inside of the ambient temperature unit 10 and the cryogenic temperature unit.

The ambient temperature unit 10 is the part into which: an ambient temperature conducting cable is inserted, insulation oil or gas 11 is filled to insulate the current lead-in wire 30 of high voltage from the outside, and an insulator is formed at the outside, wherein the current lead-in wire 30 is connected to the ambient temperature unit 10 and passes therethrough.

The cryogenic temperature unit 20 is located beneath the ambient temperature unit 10 and is composed of vacuum container 21 maintaining vacuum layer between the inner wall 23 and the outer wall 22. Inside the cryogenic temperature unit 20, a first liquid nitrogen layer 24 is provided to allow circulation of liquid nitrogen by the injection of liquid nitrogen and a gaseous nitrogen layer 25 is formed above the liquid nitrogen layer 24 through vaporization of liquid by the heat flowing in through the current lead-in wire. At this time, a partition wall is formed to separate the first liquid nitrogen layer 24 from a second liquid nitrogen layer 26 for cooling the superconducting cable 1. In addition, liquid nitrogen inlet 27 and liquid nitrogen outlet 27' are formed.

The other conventional art has a problem that heat loss is generated additionally at the first liquid nitrogen layer 24 by the convection of the gaseous nitrogen layer 25 itself, thereby increasing the cooling load of the superconducting cable terminal device.

In FIG. 4 pertaining to another conventional art, depicted is a plurality of convection interruption plates 40 installed in a section where the gaseous nitrogen layer 25 is formed.

However, the superconducting cable terminal device of another conventional art in FIG. 4 needs to safely maintain the gas-liquid interface of which insulation characteristics are vulnerable. In addition, usually two insulation bushing structures are necessary to maintain an exposed part of the conductor in an insulated condition at the gas and liquid or gas/liquid interface, wherein the high voltage is applied to the exposed part of the conductor regardless of the suppression of convection in the upper gaseous region. Furthermore, since the gas/liquid interface is variable depending on an amount of heat influx or conductor induced calorific power, a substantial range that can accommodate liquid surface variance should be secured in order to continuously ensure the insulation performance.

Particularly, in the case of FIG. 4, the convection of gas is interrupted by installing a number of plates structured to minimize convection in the gas region to enhance the stability of the gas-liquid interface. Nevertheless, in any events that a variable gas-liquid interface is used as an insulation structure as FIGS. 3 and 4, there is a problem that insulation characteristics along the interface decrease, thereby increasing the diameter of an outer container and causing instability of heat influx, which is unacceptable.

In addition, additional conventional art is introduced in US Patent Application Publication No. US 2014/0243206 A1 (published on August 28, 2014) as follows. A high voltage bushing is formed on the outer surface of a copper (Cu) conductor and a connecting unit is formed to electrically connect in a vacuum the Cu conductor and superconducting cable, then Cu conductor cools a Cu conductor terminal, superconducting cable terminal, and connecting unit thereof through heat exchange by using an external helium freezer. As the volume becomes larger by separately forming insulation structure and cooling structure, directly applying the structure to the pylon of a transmission line or the connecting unit of a substation becomes difficult.

Additional relevant prior art is disclosed in US 2014/299307 A1, JP H10 134652 A, JP 2005 341767 A, WO 94/13048 A1, US 2014/162882 A1,KR 2013 0113001 A.

### Disclosure

### Technical Problem

The present invention has been made keeping in mind the above problems occurring in the prior art, and an object of the present invention is to provide a superconducting cable terminal device having a reduced overall volume, wherein a refrigerant circulation path is formed in an insulation bushing that encloses a connecting unit for connecting a current lead and a superconducting cable, and the connecting unit, acting as a fixed thermal equilibrium point inside the insulation bushing, is cooled by refrigerant circulating through the refrigerant circulation path, thereby performing insulation and cooling operation in parallel for the device.

### Technical Solution

Accordingly, the present invention to accomplish the above object has a technical gist of providing a superconducting cable terminal device for connecting a current lead arranged at an ambient temperature and a superconducting cable arranged in a cryogenic refrigerant container, wherein the superconducting cable terminal device is configured to include the features according to claim 1.

Here, the solid insulation bushing is formed on an outside of the current lead.

At the current lead, a thermal equilibrium part is preferably formed, wherein the thermal equilibrium part is a section at which upper and lower parts of the current lead are maintained at predetermined temperatures and the temperatures are converged to a predetermined point.

Beneath the solid insulation bushing, a reinforcing insulator is preferably provided to enclose a section connecting the superconducting cable and the current lead to each other.

The refrigerant circulation path preferably includes: a refrigerant inflow circulation path being formed in the solid insulation bushing and allowing the refrigerant to enter thereinto; a refrigerant outflow circulation path being formed in the solid insulation bushing to correspond to the refrigerant inflow circulation path and connected to the refrigerant container or outlet to allow entered refrigerant to exit to the refrigerant container or to the outside; and a current lead cooling circulation path connecting the refrigerant inflow circulation path and the refrigerant outflow circulation path at a location between the circulation paths, and cooling the connecting unit by being formed outside or passing through the current lead.

The refrigerant inflow circulation path and the refrigerant outflow circulation path pass through in a zigzag shape from an outside surface of the insulation bushing toward a center thereof.

The current lead cooling circulation path passes through in a helically bent coil shape along an axis of the current lead.

The current lead includes: an ambient temperature current lead connected to an external connecting terminal; an upper current lead being provided by coupling with the ambient temperature current lead and extending downward; and a lower current lead having one end connected to the upper current lead and an opposite end coupled with the superconducting cable.

At the lower current lead, a first flange protruding toward the upper current lead is provided and the upper current lead is coupled with the first flange by insertion with the first flange.

A current lead cooling circulation path is preferably provided to pass through a contact surface of the upper current lead that contacts with the first flange, and the refrigerant cooling the current lead circulates therethrough.

The current lead cooling circulation path preferably has a semicircular cross section.

At the current lead, a fixing unit is preferably provided to support weight arising from the connection of the superconducting cable and to minimize mechanical stress generated at the inside of the solid insulation bushing due to cryogenic cooling, wherein the fixing unit is protrudes or is indented at the current lead.

The current lead and superconducting cable are preferably disposed in a straight arrangement or to be in parallel with each other along a length direction.

The solid insulation bushing is preferably composed of epoxy, fiber reinforced plastics (FRP), insulating paper, or a combination thereof.

The reinforcing insulator is preferably composed of epoxy, insulating paper, or a combination thereof.

The refrigerant is preferably liquid nitrogen or liquid helium.

At a lower part of the reinforcing insulator, a sliding support is provided to enclose the reinforcing insulator.

At the refrigerant container, a spring is preferably provided to support the sliding support by an elastic force, wherein the spring has one end being coupled with a lower part of the refrigerant container and an opposite end being in contact with the lower part of the sliding support.

At the refrigerant container, the superconducting cable is preferably installed by being inserted into a lower part of the refrigerant container.

Consequently, since the refrigerant circulation path for forcibly cooling a current lead and a connecting unit acting as a fixed thermal equilibrium point are included in the insulation bushing and a superconducting cable connecting part is reinforced by a solid insulation structure, the overall volume of the superconducting cable terminal device can be remarkably reduced. In addition, since the superconducting cable can be directly connected in a straight line as in conventional commercial products, the superconducting cable can easily replace conventional equipment in terms of the shape. As a result, there is an advantage of providing a highly improved superconducting cable terminal device for commercialization and use in real system.

### Advantageous Effects

As described above, since the refrigerant circulation path for forcibly cooling a current lead and a connecting unit acting as a fixed thermal equilibrium point are included in the insulation bushing and the superconducting cable connecting unit is reinforced by the solid insulation structure, the overall volume of a superconducting cable terminal device can be remarkably reduced.

In addition, since the superconducting cable can be directly connected in a straight line as in conventional commercial products, the superconducting cable can easily replace conventional equipment in terms of configurational aspect. As a result, there is an advantage of providing a remarkable turning point in the use of a real system and commercialization.

Furthermore, since the insulation characteristics are improved even a volume is reduced by removing gas space in the refrigerant container, there is an effect that stable operation is possible.

### Description of Drawings

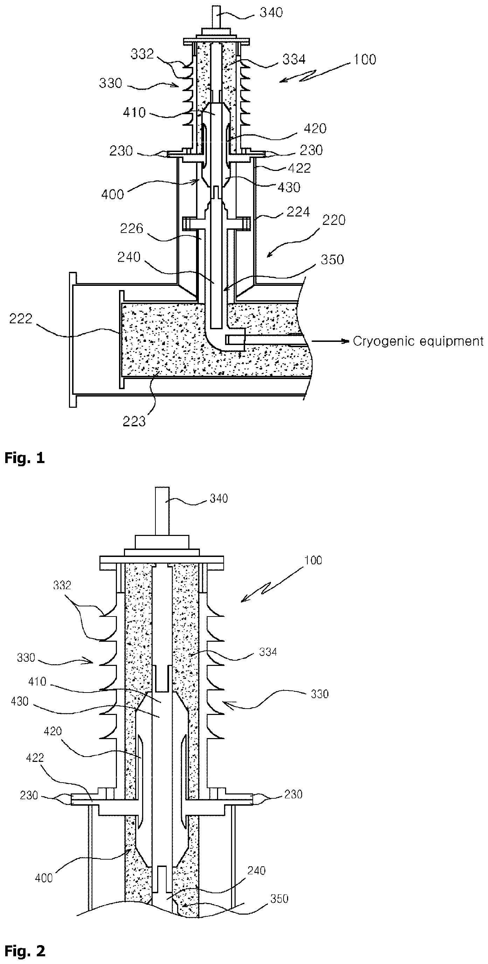

FIG. 1 is a cross sectional view of a superconducting cable terminal structure according to a conventional art,
FIG. 2 is an enlarged view of an important part of FIG. 1,
FIG. 3 is a cross sectional view of a cable terminal device according to a conventional art,
FIG. 4 is a diagram illustrating the convection interruption plates installed in the gaseous nitrogen layer of FIG. 3,
FIG. 5 is a cross sectional view of a superconducting cable terminal device according to the present invention, and
FIG. 6 is an enlarged view of an important part of FIG. 5.

### Best Mode

Hereinafter, an exemplary embodiment of the present invention will be described with reference to the accompanying drawings.

As described in the conventional arts, when the problems of existing systems are put together, it is necessary that electrical insulation characteristics should be assured while securing thermal gradient with the ambient temperature unit to ensure cooling characteristics in order for a superconducting cable to operate stably. The role of the thermal gradient above is to stabilize the temperature at which superconductivity of a superconducting cable conductor is held by forcible cooling of heat transferred from the external ambient temperature, heat arising from the electric current flow, and so on. To put it briefly, it is necessary to continuously remove heat entering from the external environment and heat generated from a Cu current lead. To secure this function, the upper part of the superconducting cable conductor and the lower part of the Cu current lead are connected to each other and structured to be exposed to the liquid nitrogen, thereby removing heat entering from the external environment and heat generated from a Cu current lead. In addition, addition of an insulation structure is prerequisite since high voltage is applied to each exposed conductor.

A problem of such an existing system e arises because a structure becomes long due to the insulation interface, wherein the structure exposes the predefined section of the connected Cu conductor connected at ambient temperature to the liquid nitrogen contained therein. Hence, when provision of the heat exchange section of the conductor for cooling can be included within the solid insulation bushing, two to four of vulnerable interfaces can be reduced to one.

At first, considered was a structure that was entirely enclosed by a solid insulating material without designing a thermal cooling point. In this case, it was evaluated that application thereof was not possible due to the problem that substantial sections of connecting unit of a superconducting cable could not hold superconductivity.

Next, to have the superconducting cable hold superconductivity over all, a structure was reviewed to design forcible cooling a part at the front end of the superconducting cable. The structure should allow flow of liquid nitrogen used as a refrigerant to forcibly discharge heat at predetermined sections of the Cu conductor. This revealed the existing problem that vulnerable insulation characteristics due to the liquid-solid interface occurred at the sections where the liquid nitrogen flowed through.

To resolve such problems, a structure was designed to secure a curved liquid nitrogen path formed with epoxy within the bushing through the evaluation of electrical insulation characteristics of a liquid-solid interface. A liquid-solid interface is not necessarily connected in a straight line and no reduction factor in terms of insulation characteristics is additionally induced even when a line is folded or bent. However, since an applied electrical field per unit length becomes larger than the insulation characteristics, it is necessary to avoid, if possible, a surface that is connected from the conductor to the ground plane and parallel to an electrical field direction. Even though a local discharge phenomenon does not lead to an overall electric discharge because the section parallel to the electrical field is small, if a discharge phenomenon occurs inside or at the surface of the solid insulator, it may induce damage to the insulation material in the long term if occurring continuously, thereby causing a problem of the reduction of the lifetime thereof. To avoid such sections, the insulation surface not parallel to the electrical field is designed if possible, even in an existing terminal structure. However, provided the insulation surface is folded, the insulation characteristics of each surface may be stable. Accordingly, an insulation path is designed to allow liquid nitrogen within an epoxy bushing. In such a structure, since a superconducting cable can be directly connected to a bushing at the ambient temperature outside, an existing ambient temperature terminal structure can be easily replaced.

A structure according to an embodiment of the present invention to achieve the objective, is generally established by a superconducting cable terminal device that includes (1) a solid insulation bushing including the connecting unit therein connecting the current lead and the superconducting cable and being formed to connect the current lead and the superconducting cable; (2) a fixing unit structure securing protruded or indented and adhered sections in the predetermined intermediate sections in order for the current lead to ensure characteristics to support the leak tightness and the mechanical weight depending on the temperature change, wherein the mechanical weight is imposed on the current lead by the direct connection of the superconducting cable; (3) a refrigerant circulation path wherein a refrigerant circulates through the solid insulation bushing and the current lead to cool the current lead; (4) a thermal equilibrium part located on the current lead inside of the insulation bushing wherein a refrigerant from the outside passing through the refrigerant circulation path effectively removes heat entering from the outside or heat produced from the current lead; (5) a refrigerant container wherein the superconducting cable is disposed to maintain cooling condition thereof by the inflow of the refrigerant passing through the refrigerant circulation path and the thermal equilibrium part; (6) a reinforcing insulator enabling reduction of the size of the connecting unit remarkably by not directly exposing the end conducting part of the superconducting cable to the refrigerant; and (7) a sliding support preventing movement or deformation of the reinforcing insulator.

Hereinafter, an exemplary embodiment of the present invention will be described in detail with reference to the accompanying drawings, but the present invention is not limited to the exemplary embodiment of the present invention.

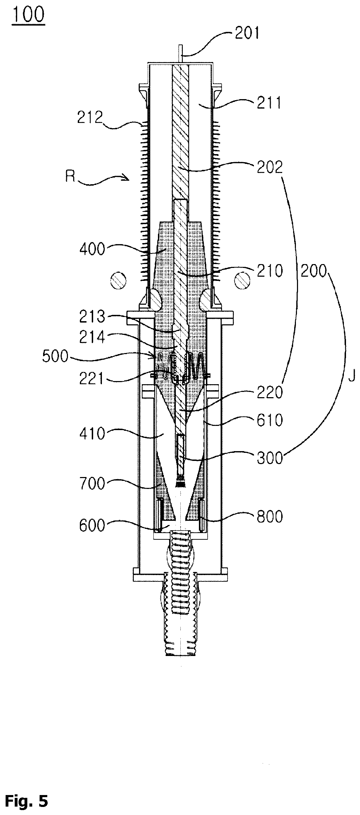

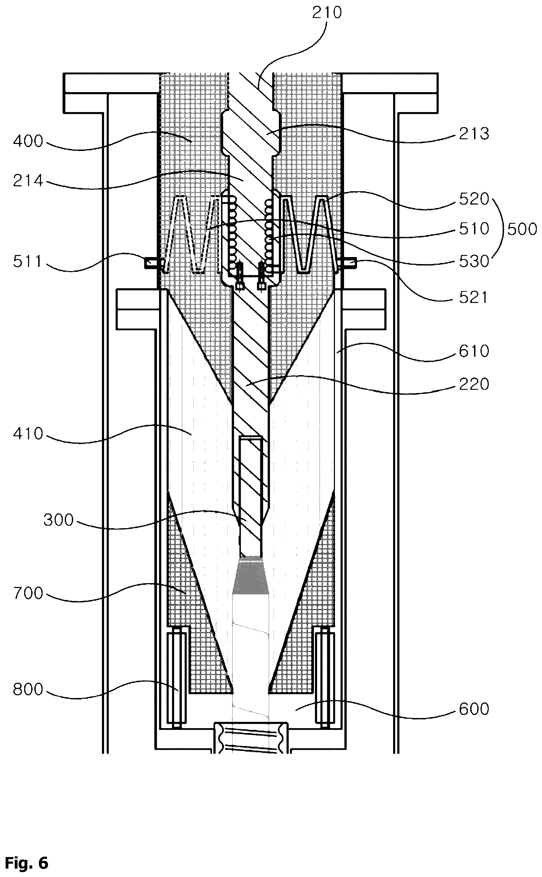

As illustrated in FIGS. 5 and 6, a superconducting cable terminal device 100 is for connecting a current lead 200 disposed at an ambient temperature and connected to external equipment with a connecting unit J connected, contacting with each other, to a superconducting cable disposed at a cryogenic temperature and acting as a superconductor, wherein the connecting unit is configured to include the current lead 200 and the superconducting cable 300. Such a terminal device includes the current lead 200, the superconducting cable 300, the solid insulation bushing 400, the refrigerant circulation path 500, the refrigerant container 600, the reinforcing insulator 410, the sliding support 700, and the spring 800.

Though the current lead 200 above is possible to use any material provided it is an electrically conductive one, Cu, Cu alloy, Al, or Al alloys are preferable. The superconducting cable 300 is preferably a high temperature superconducting cable capable of holding superconductivity under the environment of liquid nitrogen but not limited thereto.

The current lead 200 of the present invention is installed at the ambient temperature unit that is filled with ambient temperature insulation gas 211 and an ambient temperature bushing 212 is formed outside. In addition, the current lead 200 is connected to an external connecting terminal 201.

The current lead 200 and the superconducting cable 300 of the present invention are disposed to be parallel to each other along a straight line or in the length direction. Alternatively, though the current lead 200 and the superconducting cable 300 are not parallel, a coupling angle of the current lead 200 and the superconducting cable 300 can be adjusted freely.

In the case of a conventional superconducting cable terminal device, Joule's heat is generated as electrical current flows into the current lead from the outside. The section that the current lead and the superconducting cable are coupled with should be a thermal equilibrium point maintaining a stable temperature for the superconducting cable to hold a stable cryogenic state. Therefore, Joule's heat generated from or entering through the current lead should be removed to establish thermal equilibrium. To remove the Joule's heat, the current lead needs to have a part cooled by the refrigerant. In addition, since the superconducting cable should also be in a cooled state at a low temperature, it should be immersed in the refrigerant. In this connection, to immerse a part of the current lead and a superconducting cable in the refrigerant, a refrigerant container is formed in a large overall volume. In particular, in the case of a conventional superconducting cable terminal device, in order for the Joule's heat not to have an effect on the superconducting cable, the current lead and the superconducting cable are coupled with each other at an angle of about 90° to have little heat transfer. Due to the configuration coupled at an angle of 90°, it is difficult to install an additional insulator. In addition, the overall terminal structure becomes an "L" type which is different from a conventional transmission line terminal device of an "T" type, thereby enlarging the installation area.

Consequently, provided the current lead 200 and the superconducting cable 300 are disposed in a straight line as in the present invention, or the superconducting cable terminal device 100 is formed with a coupling angle of the current lead 200 and the superconducting cable being less than or equal to 20°, the overall volume and installation area can be reduced by moving the location of the thermal equilibrium point and installing an additional reinforcing insulator in the connecting process at the field. When the angle of the current lead 200 and the superconducting cable 300 exceeds 20°, the external shape becomes a type similar to "L", thereby enlarging the installation area leading to a reduction of the effect of the present invention. However, even in the case that the installation space for the superconducting cable terminal has an "L" type with a coupled state at an about right angle, the volume that becomes inevitably enlarged to some extent can be reduced to be less than that of the existing superconducting terminal, by moving the thermal equilibrium point and adding the solid insulator at the section being coupled at the right angle.

The solid insulation bushing 400 includes the connecting unit J connecting the current lead 200 and the superconducting cable 300 therein and is formed by coupling with the reinforcing insulator 410 to enclose the current lead 200 and the superconducting cable 300 such that the current lead 200 and the superconducting cable 300 are to be insulated. In the present invention, the solid insulation bushing 400 is formed to enclose the current lead 200, and the reinforcing insulator 410 is formed beneath the lower part of the insulation bushing 400 to enclose the connecting part separately from the insulation bushing 400 at the section connecting the superconducting cable 300 and the current lead 200. Meanwhile, as the end part of the superconducting cable 300 has a potential to be exposed to the liquid nitrogen in the refrigerant container 600, the reinforcing insulator 410 plays a role in enclosing the end part of the superconducting cable 300 not to be directly exposed to the liquid nitrogen.

The insulation bushing 400 is formed for the insulation of the current lead 200. However, the insulation bushing 400 exists also for the protection of the current lead 200 from external impact as well as for the insulation thereof. Such an insulation bushing 400 has a column shape enclosing the current lead 200 and is formed such that the diameter thereof gradually reduces as it gets closer to the both end parts of the current lead 200. The insulation bushing 400 can be chosen from epoxy, FRP, polypropylene laminated paper (PPLP) insulating paper, or a group composed of a combination thereof. It is preferable for the parts of the refrigerant circulation path 500 in the insulation bushing 400 to be composed of epoxy which is a solid material manufactured in advance.

The reinforcing insulator 410 is formed for the insulation of the section at which the superconducting cable 300 and the current lead 200 are connected and it is also formed to enclose the current lead 200 as well as the terminal of superconducting cable 300. Whereas a part of the solid insulation bushing 400 is exposed to the outside, the reinforcing insulator 410 is disposed inside of the refrigerant container 600 containing the refrigerant. The reinforcing insulator 410 is disposed to enclose from the end part of the solid insulation bushing 400 enclosing the current lead 200 to the superconducting cable 300 immersed in the refrigerant. Like the solid insulation bushing 400, the reinforcing insulator 410 is formed for the diameter thereof to gradually taper as it gets closer to the lower end part thereof. Only the end part of the superconducting cable 300 is enclosed by the reinforcing insulator 410 and the rest of the superconducting cable 300 in a state without the reinforcing insulator 410 is in contact with the refrigerant in the refrigerant container 600. As described above, the reinforcing insulator 410 plays a role for the end part of the superconducting cable 300 not to be directly exposed to the liquid nitrogen as well as for the purpose of insulation.

The reinforcing insulator 410 can be chosen from epoxy, PPLP of insulating paper, or a group composed of a combination thereof, however, but it is preferably formed by using insulating paper. Then, it is formed to have a predetermined volume by stacking sheets of the insulating paper one at a time in a consecutive order.

The present invention includes the refrigerant circulation path 500 for the cooling of the current lead 200 to reduce the volume of the refrigerant container 600 and so on for the superconducting cable terminal device 100 of which volume is large due to the refrigerant container 600.

The refrigerant circulation path 500 means a passage which passes through the solid insulation bushing 400 and the current lead 200 and through which the refrigerant circulates to cool the current lead 200. Meanwhile, the solid insulation bushing 400 encloses the current lead 200 and the refrigerant circulation path 500 is preferably formed in the solid insulation bushing 400 like this.

Through the refrigerant circulation path 500 like this, forcible cooling can be provided individually for the section of the current lead 200 not immersed in the refrigerant container 600 in addition to the cooling for the current lead 200 in the refrigerant container 600.

The refrigerant circulation path 500 is composed of the refrigerant inflow circulation path 510, the refrigerant outflow circulation path 520, and the current lead cooling circulation path 530. The refrigerant inflow circulation path 510 which is formed in the solid insulation bushing 400, is a passage where the refrigerant enters into the solid insulation bushing 400.

In the refrigerant inflow circulation path 510 like this, the refrigerant inlet 511 to which the refrigerant enters from the outside is formed. The refrigerant inflow circulation path 510 is configured to pass through from the outer side of the solid insulation bushing 400 toward the current lead 200 disposed in the center thereof, wherein the refrigerant enters passing through in a zigzag shape rather than a straight line. The angle between passages in the zigzag shape is configured to be 10 to 30°. For the angle of the zigzag shape of the refrigerant inflow circulation path 510, when the angle is less than 10°, the distance between passages is so short that a crack may be generated, and when the angle is greater than 30°, the distance of the zigzag shape is short whereby the overall distance of the refrigerant circulation path 500 is reduced.

The refrigerant entering from the outside enters into the current lead cooling circulation path 530 through the refrigerant inflow circulation path 510. The current lead cooling circulation path 530 plays a role to connect the refrigerant inflow circulation path 510 and the refrigerant outflow circulation path 520. The current lead cooling circulation path 530 is formed by passing through the current lead 200 to cool the current lead 200, and has a circular or semicircular cross section, wherein the current lead cooling circulation path 530 is preferably configured in a helically bent coil shape along the axis of the current lead 200. Provided the current lead cooling circulation path 530 is passed through in a coil shape, the contact area of the current lead 200 and the refrigerant is increased whereby cooling of the current lead 200 can be effectively performed.

In particular, since the current lead cooling circulation path 530 is helically composed along the axis of the current lead 200, it cools not only one surface but all over the surface along the diameter of the current lead 200, thereby resulting in effective cooling. The current lead cooling circulation path 530 passing through the current lead 200 is preferably formed passing through the area between the center and the outermost surface than at the outermost surface from the center in terms of cooling efficiency. When the current lead cooling circulation path 530 is formed at the outermost surface of the current lead 200, cooling is established smoothly for the outermost area, but cooling may not be established smoothly for the area closer to the center.

The refrigerant passes by the refrigerant outflow circulation path 520 after cooling the current lead 200 through the current lead cooling circulation path 530 and is discharged to the outside through the outlet 521 formed at the end part of the refrigerant outflow circulation path 520 or enters into the refrigerant container 600 along the refrigerant inflow path 610. When maintaining a stable state of the superconducting cable 300 is of concerned due to a large amount of heat entering the upper current lead 210 and heat generated from the upper current lead 210, a terminal cooling passage can be installed separately for the stable operation of the superconducting cable 300, wherein the terminal cooling passage is composed of the refrigerant inlet 511, the refrigerant inflow circulation path 510, the current lead cooling circulation path 530, the refrigerant outflow circulation path 520, and the refrigerant outlet 521. The refrigerant outflow circulation path 520 is formed at the solid insulation bushing 400 to correspond to the refrigerant inflow circulation path 510 and passes through in a zigzag shape from the outer side toward the center like the refrigerant inflow circulation path 510.

Like this, the refrigerant passes through the refrigerant circulation path 500 while cooling the current lead 200 and enters into the refrigerant container 600 along the refrigerant inflow path 610 formed between the refrigerant container 600 and the reinforcing insulator 410.

Disposed inside the refrigerant container 600 are the end part of the solid insulation bushing 400, the superconducting cable 300, the reinforcing insulator 410, the sliding support 700, and the spring 800, which are cooled by the refrigerant that enters into the refrigerant container 600. The inflow refrigerant passing by the refrigerant circulation path 500 enters into the refrigerant container 600 as a liquid as is not vaporized by the structure of the refrigerant circulation path 500, whereby the internal superconducting cable 300 can be smoothly cooled.

The refrigerant container 600 is formed to have the same or similar diameter as the solid insulation bushing 400 in order for the volume of the superconducting cable terminal device 100 to be minimized. In fact, a conventional art included a refrigerant container with a large volume to cool the current lead heated by Joule's heat. In the case of the present invention, since the refrigerant circulation path 500 is separately formed for forcible cooling of the current lead 200, the temperature of the current lead 200 being inserted in the refrigerant container 600 is not high, whereby the volume of the refrigerant container 600 does not become necessarily large. For the current lead 200, Joule's heat is generated by the electric current over the entire section, and provided the refrigerant circulation path 500 is installed in the middle section of the current lead 200, the temperature of the current lead 200 being cooled affects the whole section thereof. That is, though the current lead 200 is cooled at the middle section, cooling is established even up to the end part being close to the superconducting cable 300, thereby enabling thermal equilibrium with the superconducting cable 300. Such a refrigerant container 600 is preferably composed of a metal such as stainless steel that has an excellent strength.

In the lower part of the reinforcing insulator 410, formed are the connecting unit J, the solid insulation bushing 400 enclosing the connecting unit J, and the sliding support 700 being in contact with the lower part of the reinforcing insulator 410 in the form enclosing the connecting part of the current lead 200 and the superconducting cable 300. The sliding support 700 which is composed of a material such as FRP enables the reinforcing insulator 410 and the solid insulation bushing 400 to be in mutually closely contact with each other by playing a role in supporting the reinforcing insulator 410.

In the lower part of the sliding support 700, a plurality of the springs 800 supporting the sliding support 700 at the lower part thereof is formed along the lower surface of the refrigerant container. The spring 800 supports elastically the lower surface of the sliding support 700 by being installed inside the refrigerant container 600 for the lower supporter of the spring 800 to be the lower surface of the refrigerant container 600 and the upper supporter thereof to be the lower surface of the sliding support 700.

The spring enables the superconducting cable 300, the current lead 200, the solid insulation bushing 400, the reinforcing insulator 410 and so on to be held at a predetermined position and prevented from sagging downwards due to gravity at the same time.

Usually, as the current lead 200 and the superconducting cable 300 are cooled after being assembled at an ambient temperature, the volume of all of the structures are reduced when the current lead 200 and the superconducting cable 300 assembled at an ambient temperature are cooled for the difference to be more than or equal to minimum 200°C. In this case, since being composed entirely of metal that can resist deformation, the current lead 200, the superconducting cable 300, the refrigerant container and so on, which are mechanically strong, can maintain mechanical coupling strength thereof. However, mechanical contact force thereof with the reinforcing insulator 410, which is additionally manufactured at the installation field, may be decreased and even the case is expected that the structure of the reinforcing insulator 410 itself is loosened. The sliding support 700 and the spring 800 are installed against this.

The upper current lead 210 is formed at the ambient temperature unit R of the superconducting cable terminal device 100 and connected to the external connecting terminal 201.

The upper current lead 210 means the current lead that extends to the outside of the solid insulation bushing 400 and is connected to an ambient temperature current lead 202. The lower current lead 220 means the current lead that one end is coupled with the upper current lead 210 and the opposite end is coupled with the end part of the superconducting cable along the same axis line of the upper current lead 210.

While the lower current lead 220 includes the first flange 221 protruding toward the upper current lead 210, the upper current lead 210 protrudes toward the lower current lead 220 and the protruding part thereof is inserted into the first flange 221, thereby being coupled mutually.

In addition, at the outer side of the upper current lead 210 of the current lead 200, a protrusion is formed and the protrusion forms the fixing unit 213. By forming the fixing unit 213, it plays a role to support that the solid insulation bushing 400 formed at the outer side of the current lead 200 is stably coupled to the outer side of the current lead 200.

As an additional element to couple more tightly the upper current lead 210 and the lower current lead 220, a bolt can be used. Therefore, the upper current lead 210 and the lower current lead 220 can be coupled by the bolt and no problem occurs even when the volume of the superconducting cable 300 is reduced.

In addition, a thermal equilibrium part 214 is formed by the refrigerant circulation path passing through the upper current lead 210 of the current lead 200, wherein the thermal equilibrium part 214 is the section at which the ambient temperature part and the low temperature part of the upper current lead 210 are held and converged mutually at a predetermined temperature. Here, the thermal equilibrium part 214 is the point where the upper current lead begins to maintain a temperature of 77K at which liquid nitrogen vaporizes when liquid nitrogen is used as a refrigerant.

At this time, the current lead cooling circulation path 530 can cool the current lead 200 through the contact with the first flange 221. Though the current lead cooling circulation path 530 can be configured to have a circular or semicircular cross section, a semicircular cross section which has a simple shape is preferred to the circular cross section which is complex to manufacture, thereby increasing the manufacturing cost.

By dividing the current lead 200 into the upper current lead 210 and the lower current lead 220 and allowing coupling thereof by forming the fixing unit 213 at the upper current lead 210, the current lead 200 is prevented from leaving the location thereof even when reduction of the superconducting cable 300 occurs and the current lead 200 and the superconducting cable 300 can also be prevented from separation.

The refrigerant used in this invention is a liquid refrigerant and is preferably liquid helium or liquid nitrogen either of which is generally used. Then, a value of Joule's heat can be known provided the value of electric current flowing in and the material kind of the current lead 200 are known when supplying the refrigerant into the refrigerant circulation path 500. Accordingly, by controlling the temperature depending on the kind of the refrigerant or feeding speed of the refrigerant being supplied, the most appropriate environment for the superconducting cable terminal device 100 can be made.

The present invention can reduce the overall height of the superconducting cable terminal device 100 because the thermal equilibrium part 214 is included inside the solid insulation bushing 400, not exposed separately in the refrigerant container 600 as in the conventional art, wherein the thermal equilibrium part 214 plays a role as a thermal equilibrium point connecting the current lead 200 and the superconducting cable 300. In addition, the volume of the refrigerant container 600 can be reduced by the refrigerant circulation path 500 which cools forcibly the current lead 200 in the area other than the refrigerant container 600, whereby overall system operation condition can be stably secured. Furthermore, insulation and cooling is established in parallel by forming a part of the refrigerant circulation path 500 within the solid insulation bushing 400. Consequentially, the overall volume of the superconducting cable terminal device is reduced

Meanwhile, when the refrigerant enters into the refrigerant container 600 after passing through the refrigerant circulation path 500, the refrigerant is not vaporized and is able to maintain a liquefied state due to the shape of the refrigerant circulation path 500 and by continuous supply of the refrigerant. This provides an advantage of the present invention.

### Industrial Applicability

The present invention relates to a superconducting cable terminal device and, more particularly, to a technique that can be applied to a superconducting cable terminal device having a reduced overall volume, wherein insulation and cooling for the device are performed in parallel by including a refrigerant circulation path for forcibly cooling a current lead and a connecting unit acting as a fixed thermal equilibrium point in an insulation bushing.

## Claims

1. A superconducting cable terminal device for connecting a current lead arranged at an ambient temperature and a superconducting cable with a cryogenic refrigerant container in which it is arranged, whereby the device comprises:
a connecting unit (J) including the current lead (200) and the superconducting cable (300) and being formed by connection thereof;
a solid insulation bushing (400) being formed at an outside of the connecting unit (J);
a refrigerant inflow circulation path (510) being formed in the solid insulation bushing (400) and allowing the refrigerant to enter thereinto; a refrigerant outflow circulation path (520) being formed in the solid insulation bushing (400) to correspond to the refrigerant inflow circulation path (510) and connected to the refrigerant inflow circulation path (510) and connected to the refrigerant container (600) or outlet to allow entered refrigerant to exit to the refrigerant container (600) or to the outside,
forming a refrigerant passage having high-voltage insulation characteristics and cooling the connecting unit (J) by being formed outside the current lead or passing through the current lead (200);
and a current lead cooling circulation path (530) passes through in a helically bent coil shape along an axis of the current lead (200) on the inner side of the bushing (400), wherein the current lead cooling circulation path (530) is connecting the refrigerant inflow circulation path (510) and the refrigerant outflow circulation path (520) at a location between the circulation paths, and the refrigerant inflow circulation path (510)
and the refrigerant outflow circulation path (520) pass through in a zigzag shape from an outside surface of the insulation bushing (400) toward a center thereof, wherein,
beneath the solid insulation bushing (400), a reinforcing insulator (410) is provided to enclose a section where the superconducting cable (300) and the current lead (200) are connected to each other and wherein
the current lead includes:
an ambient temperature current lead (202) being connected to an external connecting terminal (201);
an upper current lead (210) being provided by coupling with the ambient temperature current lead (202) and extending downward; and
a lower current lead (220) having one end connected to the upper current lead (210) and an opposite end coupled with the superconducting cable (300).

2. The device of claim 1, wherein the solid insulation bushing (400) is formed on an outside of the current lead (200), wherein preferably at the current lead (200), a thermal equilibrium part (214) is formed, wherein the thermal equilibrium part (214) is a section at which upper and lower parts of the current lead (200) are maintained at predetermined temperatures and the temperatures are converged to a predetermined point.

3. The device of claim 1, wherein, at the lower current lead (220), a first flange protruding toward the upper current lead (210) is provided and the upper current lead (210) is coupled with the first flange by insertion with the first flange, wherein preferably a current lead cooling circulation path (530) is provided to pass through a contact surface of the upper current lead (210) that contacts with the first flange, and the refrigerant cooling the current lead (200) circulates therethrough and wherein preferably the current lead cooling circulation path (530) has a semicircular cross section.

4. The device of claim 1, wherein, at the current lead (200), a fixing unit (213) is provided to support weight arising from the connection of the superconducting cable (300) and to minimize mechanical stress generated at the inside of the solid insulation bushing (400) due to cryogenic cooling, wherein the fixing unit (213) is protruded or indented at the current lead (200).

5. The device of claim 1, wherein the current lead (200) and superconducting cable (300) are disposed in a straight arrangement or to be in parallel with each other along a length direction thereof.

6. The device of claim 1, wherein the solid insulation bushing (400) is composed of epoxy, fiber reinforced plastics (FRP), insulating paper, or a combination thereof, or
wherein the reinforcing insulator (410) is composed of epoxy, insulating paper, or a combination thereof.

7. The device of claim 1, wherein the refrigerant is liquid nitrogen or liquid helium.

8. The device of claim 1, wherein, at a lower part of the reinforcing insulator (410), a sliding support (700) is provided to enclose the reinforcing insulator (410).

9. The device of claim 8,
wherein, at the refrigerant container (600), an elastic body is provided to support the sliding support (700) by an elastic force, wherein the elastic body has one end being coupled with a lower part of the refrigerant container (600) and an opposite end being in contact with the lower part of the sliding support (700), wherein preferably the elastic body is a spring (800).

10. The device of claim 1, wherein, at the refrigerant container (600), the superconducting cable (300) is installed by being inserted into a lower part of the refrigerant container (600).

## Patentansprüche

1. Supraleitende Kabelanschlussvorrichtung zum Verbinden einer bei einer Umgebungstemperatur angeordneten Stromzuleitung und eines supraleitenden Kabels mit einem Behälter für kryogenes Kältemittel, in dem es angeordnet ist,
wobei die Vorrichtung umfasst:
eine Verbindungseinheit (J), die die Stromzuleitung (200) und das supraleitende Kabel (300) enthält und durch Verbindung davon ausgebildet ist;
eine Festkörper-Isolierungsbuchse (400), die an einer Außenseite der Verbindungseinheit (J) ausgebildet ist;
einen Kältemitteleinström-Zirkulationspfad (510), der in der Festkörper-Isolierungsbuchse (400) ausgebildet ist und dem Kältemittel erlaubt, darein einzutreten; ein Kältemittelausström-Zirkulationspfad (520), der in der Festkörper-Isolierungsbuchse (400) ausgebildet ist, um dem Kältemitteleinström-Zirkulationspfad (510) zu entsprechen, und mit dem Kältemittelbehälter (600) oder -auslass verbunden ist, um eingetretenem Kältemittel zu erlauben, in den Kältemittelbehälter (600) oder nach außen auszutreten, wobei ein Kältemitteldurchgang mit Hochspannungsisolierungseigenschaften ausgebildet wird und die Verbindungseinheit (J) gekühlt wird, indem er außerhalb der Stromzuleitung ausgebildet wird oder durch die Stromzuleitung (200) verläuft;
und wobei ein Stromzuleitungs-Kühlzirkulationspfad (530) in einer spiralförmig gebogenen Spulenform entlang einer Achse der Stromzuleitung (200) an der Innenseite der Buchse (400) verläuft, wobei der Stromzuleitungs-Kühlzirkulationspfad (530) den Kältemitteleinström-Zirkulationspfad (510) und den Kältemittelausström-Zirkulationspfad (520) an einer Stelle zwischen den Zirkulationspfaden verbindet, und der Kältemitteleinström-Zirkulationspfad (510) und der Kältemittelausström-Zirkulationspfad (520) in einer Zickzackform von einer Außenfläche der Isolierungsbuchse (400) in Richtung einer Mitte davon verlaufen, wobei unter der Festkörper-Isolierungsbuchse (400) ein verstärkender Isolator (410) bereitgestellt ist, um einen Abschnitt einzuschließen, in dem das supraleitende Kabel (300) und die Stromzuleitung (200) miteinander verbunden sind, und wobei die Stromzuleitung beinhaltet:
eine Umgebungstemperatur-Stromzuleitung (202), die mit einem externen Verbindungsanschluss (201) verbunden ist;
eine obere Stromzuleitung (210), die durch Kopplung mit der Umgebungstemperatur-Stromzuleitung (202) bereitgestellt wird und sich nach unten erstreckt; und
eine untere Stromzuleitung (220), die ein mit der oberen Stromzuleitung (210) verbundenes Ende und ein entgegengesetztes mit dem supraleitenden Kabel (300) gekoppeltes Ende aufweist.

2. Vorrichtung nach Anspruch 1, wobei die Festkörper-Isolierungsbuchse (400) an einer Außenseite der Stromzuleitung (200) ausgebildet ist, wobei vorzugsweise an der Stromzuleitung (200) ein thermisches Gleichgewichtsteil (214) ausgebildet ist, wobei das thermische Gleichgewichtsteil (214) ein Abschnitt ist, in dem obere und untere Teile der Stromzuleitung (200) auf vorbestimmten Temperaturen gehalten werden und die Temperaturen auf einen vorbestimmten Punkt konvergieren.

3. Vorrichtung nach Anspruch 1, wobei an der unteren Stromzuleitung (220) ein in Richtung der oberen Stromzuleitung (210) vorstehender erster Flansch bereitgestellt ist und die obere Stromzuleitung (210) mit dem ersten Flansch durch Einfügen mit dem ersten Flansch gekoppelt ist, wobei vorzugsweise ein Stromzuleitungs-Kühlzirkulationspfad (530) bereitgestellt ist, um durch eine Kontaktfläche der oberen Stromzuleitung (210) zu verlaufen, die den ersten Flansch berührt, und das Kältemittel, das die Stromzuleitung (200) kühlt, dadurch zirkuliert und wobei vorzugsweise der Stromzuleitungs-Kühlzirkulationspfad (530) einen halbkreisförmigen Querschnitt aufweist.

4. Vorrichtung nach Anspruch 1, wobei an der Stromzuleitung (200) eine Befestigungseinheit (213) bereitgestellt ist, um das Gewicht zu tragen, das durch die Verbindung des supraleitenden Kabels (300) entsteht, und um die mechanische Spannung zu minimieren, die im Inneren der Festkörper-Isolierungsbuchse (400) durch kryogene Kühlung erzeugt wird, wobei die Befestigungseinheit (213) an der Stromzuleitung (200) vorsteht oder eingerückt ist.

5. Vorrichtung nach Anspruch 1, wobei die Stromzuleitung (200) und das supraleitende Kabel (300) in einer geraden Anordnung oder zum zueinander Parallelsein entlang einer Längsrichtung davon angeordnet sind.

6. Vorrichtung nach Anspruch 1, wobei die Festkörper-Isolierungsbuchse (400) aus Epoxid, faserverstärktem Kunststoff (FRP), Isolierpapier oder einer Kombination davon besteht, oder wobei der verstärkende Isolator (410) aus Epoxid, Isolierpapier oder einer Kombination davon besteht.

7. Vorrichtung nach Anspruch 1, wobei das Kältemittel flüssiger Stickstoff oder flüssiges Helium ist.

8. Vorrichtung nach Anspruch 1, wobei an einem unteren Teil des verstärkenden Isolators (410) ein Gleitträger (700) bereitgestellt ist, um den verstärkenden Isolator (410) zu umschließen.

9. Vorrichtung nach Anspruch 8, wobei an dem Kältemittelbehälter (600) ein elastischer Körper bereitgestellt ist, um den Gleitträger (700) durch eine elastische Kraft zu tragen, wobei der elastische Körper ein Ende, das mit einem unteren Teil des Kältemittelbehälters (600) gekoppelt ist, und ein entgegengesetztes Ende aufweist, das in Kontakt mit dem unteren Teil des Gleitträgers (700) ist, wobei vorzugsweise der elastische Körper eine Feder (800) ist.

10. Vorrichtung nach Anspruch 1, wobei am Kältemittelbehälter (600) das supraleitende Kabel (300) installiert wird, indem es in einen unteren Teil des Kältemittelbehälters (600) eingeführt wird.

## Revendications

1. Dispositif borne de câble supraconducteur destiné à connecter un conducteur de courant agencé à une température ambiante et un câble supraconducteur avec un récipient de réfrigérant cryogénique dans lequel il est agencé,
moyennant quoi le dispositif comprend :
une unité de raccordement (J) comprenant le conducteur de courant (200) et le câble supraconducteur (300) et qui est formée par raccordement de ceux-ci ;
une douille d'isolation solide (400) qui est formée à l'extérieur de l'unité de raccordement (J) ; un trajet de circulation d'entrée de réfrigérant (510) qui est formé dans la douille d'isolation solide (400) et permettant au réfrigérant d'entrer dans celle-ci ; un trajet de circulation de sortie de réfrigérant (520) qui est formé dans la douille d'isolation solide (400) pour correspondre au trajet de circulation d'entrée de réfrigérant (510) et raccordé au récipient de réfrigérant (600) ou à la sortie pour permettre au réfrigérant entré de sortir vers le récipient de réfrigérant (600) ou vers l'extérieur, formant un passage de réfrigérant possédant des caractéristiques d'isolation haute tension et refroidissant l'unité de raccordement (J) en étant formé à l'extérieur du conducteur de courant ou passant par le conducteur de courant (200) ;
et un trajet de circulation de refroidissement de conducteur de courant (530) passe à travers sous une forme de bobine courbée en hélice le long d'un axe du conducteur de courant (200) sur le côté interne de la douille (400), ledit trajet de circulation de refroidissement de conducteur de courant (530) raccordant le trajet de circulation d'entrée de réfrigérant (510) et le trajet de circulation de sortie de réfrigérant (520) au niveau d'un emplacement entre les trajets de circulation et ledit trajet de circulation d'entrée de réfrigérant (510) et ledit trajet de circulation de sortie de réfrigérant (520) passant à travers sous une forme de zigzag à partir d'un surface extérieure de la douille d'isolation (400) vers un centre de celle-ci, sous la douille d'isolation solide (400), un isolant de renforcement (410) étant prévu pour enfermer une section où le câble supraconducteur (300) et le conducteur de courant (200) sont raccordés l'un à l'autre et ledit conducteur de courant comprenant :
un conducteur de courant à température ambiante (202) qui est raccordé à une borne de raccordement externe (201) ;
un conducteur de courant supérieur (210) étant fourni par couplage avec le conducteur de courant à température ambiante (202) et s'étendant vers le bas ; et
un conducteur de courant inférieur (220) possédant une extrémité raccordée au conducteur de courant supérieur (210) et une extrémité opposée couplée au câble supraconducteur (300).

2. Dispositif selon la revendication 1, ladite douille d'isolation solide (400) étant formée sur l'extérieur du conducteur de courant (200), de préférence au niveau du conducteur de courant (200), une partie d'équilibre thermique (214) étant formée, ladite partie d'équilibre thermique (214) étant une section au niveau de laquelle des parties supérieure et inférieure du conducteur de courant (200) sont maintenues à des températures prédéfinies et lesdites températures convergeant vers un point prédéfini.

3. Dispositif selon la revendication 1, au niveau du conducteur de courant inférieur (220), une première bride faisant saillie vers le conducteur de courant supérieur (210) étant prévue et ledit conducteur de courant supérieur (210) étant couplé à la première bride par insertion avec la première bride, de préférence un trajet de circulation de refroidissement de conducteur de courant (530) étant prévu pour passer à travers une surface de contact du conducteur de courant supérieur (210) qui entre en contact avec la première bride, et ledit réfrigérant refroidissant le conducteur de courant (200) circulant à travers celui-ci et de préférence, ledit trajet de circulation de refroidissement de conducteur de courant (530) possédant une section transversale semi-circulaire.

4. Dispositif selon la revendication 1, au niveau du conducteur de courant (200), une unité de fixation (213) étant prévue pour supporter le poids résultant du raccordement du câble supraconducteur (300) et pour minimiser la contrainte mécanique générée à l'intérieur de la douille d'isolation solide (400) due au refroidissement cryogénique, ladite unité de fixation (213) étant saillante ou en retrait au niveau du conducteur de courant (200).

5. Dispositif selon la revendication 1, ledit conducteur de courant (200) et ledit câble supraconducteur (300) étant disposés dans un agencement droit ou pour être parallèles l'un à l'autre le long d'une direction de longueur de ceux-ci.

6. Dispositif selon la revendication 1, ladite douille d'isolation solide (400) étant constituée d'époxy, de plastiques renforcés de fibres (FRP), de papier isolant ou d'une combinaison de ceux-ci, ou ledit isolant de renforcement (410) étant constitué d'époxy, de papier isolant ou d'une combinaison de ceux-ci.

7. Dispositif selon la revendication 1, ledit réfrigérant étant de l'azote liquide ou de l'hélium liquide.

8. Dispositif selon la revendication 1, au niveau d'une partie inférieure de l'isolant de renforcement (410), un support coulissant (700) étant prévu pour enfermer l'isolant de renforcement (410).

9. Dispositif selon la revendication 8, au niveau du récipient de réfrigérant (600), un corps élastique étant prévu pour supporter le support coulissant (700) par une force élastique, ledit corps élastique possédant une extrémité qui est couplée à une partie inférieure du récipient de réfrigérant (600) et une extrémité opposée qui est en contact avec la partie inférieure du support coulissant (700), de préférence ledit corps élastique étant un ressort (800).

10. Dispositif selon la revendication 1, au niveau du récipient de réfrigérant (600), ledit câble supraconducteur (300) étant installé en étant inséré dans une partie inférieure du récipient de réfrigérant (600).
